# EUROPÄISCHE PATENTANMELDUNG

(11) **EP 3 900 532 A1**
(43) Veröffentlichungstag der Anmeldung: **27.10.2021**
(21) Anmeldenummer: 20205222.1
(22) Anmeldetag: 02.11.2020
(51) Int. Cl.: A01M 7/00

(54) **TRAGBARE SPRÜHVORRICHTUNG UND SPRÜHKOPFANORDNUNG FÜR EINE DERARTIGE SPRÜHVORRICHTUNG**

(71) Anmelder: Bayer AG, 51373 Leverkusen (DE); Bayer CropScience Ltd., CB4 0WB Cambridge (GB)
(72) Erfinder: Die Erfindernennung liegt noch nicht vor
(74) Vertreter: BIP Patents

(57) **Zusammenfassung**

Die Erfindung betrifft eine tragbare Sprühvorrichtung (12) zum Auftragen von einem Wirkstoff, insbesondere einem Insektizid, auf ein textiles Flächengebilde, mit einem Vorratstank (52) für eine den Wirkstoff beinhaltende Flüssigkeit und mit einer Sprühkopfanordnung (10). Es ist vorgesehen, dass die Sprühkopfanordnung (10) mehrere Sprühdüsen (14, 16) mit einem jeweiligen Düsenauslass (24) zum Versprühen der Flüssigkeit und eine diese Sprühdüsen (14, 16) haltenden Halterung (18) aufweist, wobei zumindest zwei der Sprühdüsen (14, 16) ein Sprühdüsenpaar bilden, bei dem die beiden Sprühdüsen (14, 16) bezüglich eines zwischen ihnen vorhandenen und nach außen offenen Freiraums (20) gegenüberliegend angeordnet und die Düsenauslässe (24) der Spritzdüsen (14, 16) einander zugewandt sind.

Die Erfindung betrifft weiterhin ein entsprechende Sprühkopfanordnung (10) für eine derartige tragbare Sprühvorrichtung (12).

## Beschreibung

Die Erfindung betrifft eine tragbare Sprühvorrichtung zum Auftragen von einem Wirkstoff, insbesondere einem Insektizid, auf ein textiles Flächengebilde, mit einem Vorratstank für eine den Wirkstoff beinhaltende Flüssigkeit und mit einer Sprühkopfanordnung.

Des Weiteren betrifft die Erfindung eine Sprühkopfanordnung für eine derartige Sprühvorrichtung, die mehrere Sprühdüsen mit einem jeweiligen Düsenauslass zum Versprühen einer Flüssigkeit und eine diese Sprühdüsen haltende Halterung aufweist.

Eine weit verbreitete Standardbauweise afrikanischer Häuser beziehungsweise Hütten lässt zwischen dem Dach und dem Anfang der Hauswände einen Zwischenraum oder Spalt (das sogenannte "Eave-gap"). Es dient der Belüftung und Kühlung des Haus-/Hütteninnenraums, bietet jedoch der Malaria-Mücke Anopheles spec. einen Weg ins Hausinnere an. Platziert man im Bereich der Eave-gaps einen langen Textilstreifen, wie etwa einen Sisal-, Hessian- oder Jutestreifen, der mit Insektizid(en) behandelt/ausgerüstet ist, so blockiert man den Eintritt der Mücken weitgehend und bei entsprechenden Wirkstoffen kann man ausgehend von diesen Streifen auch die Mücken weiträumig vertreiben. Dabei werden die Textilstreifen, zumeist Gewebestreifen, außen locker zwischen Dach und Hauswand befestigt, sodass die Lüftung und Kühlung noch gewährleistet ist. Damit stets eine Mückenschutzwirkung von den Gewebestreifen ausgeht, müssen diese von Zeit zu Zeit mit neuem Wirkstoffprodukt ausgerüstet werden.

Dieses Vorgehen wird beispielsweise in dem Fachartikel »Mmbando et al.: "Eave ribbons treated with the spatial repellent, transfluthrin, can effectively protect against indoor-biting and outdoor-biting malaria mosquitoes" Malar J (2018) 17:368 https://doi.org/10.1186/s12936-018-2520-1« beschrieben.

Die Druckschrift US 2003/0003126 A1 beschreibt die Nutzung von mit Insektiziden ausgerüsteten Stoffen/Textilien zur Schädlingsbekämpfung und Vektorenkontrolle (Kontrolle von Krankheitsüberträgern), insbesondere im Zusammenhang mit Malaria, und auch das entsprechende Ausrüsten von Stoffen mit Insektiziden durch Eintauchen des Stoffes in eine insektizidhaltige Lösung, Einweichen des Stoffes in der Lösung für eine bestimmte Zeit oder Aufsprühen der Lösung auf den Stoff. Für das Aufsprühen wird in dieser Druckschrift die Verwendung eines Handsprühgerätes (hand held sprayer) oder einer Sprühflasche (spray bottle) vorgeschlagen.

Die Druckschrift EP 2 071 948 A1 beschreibt eine als Rückenspritze ausgebildete tragbare Sprühvorrichtung zum Aufbringen von einem Wirkstoff, nämlich einem Herbizid, im Wurzelbereich eines Baums. Die Rückenspritze umfasst einen Vorratstank für eine den Wirkstoff beinhaltende Flüssigkeit und eine Sprühkopfanordnung, die zwei Sprühdüsen mit einem jeweiligen Düsenauslass zum Versprühen der Flüssigkeit und eine diese Sprühdüsen haltenden Halterung aufweist, wobei die beiden Sprühdüsen ein Sprühdüsenpaar bilden, bei dem die beiden Sprühdüsen bezüglich eines zwischen ihnen vorhandenen Zwischenraums gegenüberliegend angeordnet sind.

Aufgabe der Erfindung ist es, Maßnahmen anzugeben, die ein Ausrüsten von textilen Flächengebilden mit Wirkstoffen wie Insektiziden einfach und effektiv ermöglichen.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils für sich genommen oder in beliebiger Kombination miteinander einen Aspekt der Erfindung darstellen können.

Bei der erfindungsgemäßen tragbaren Sprühvorrichtung zum Auftragen von einem Wirkstoff, insbesondere einem Insektizid, auf ein textiles Flächengebilde, bei der diese Sprühvorrichtung einen Vorratstank für eine den Wirkstoff beinhaltende Flüssigkeit und eine Sprühkopfanordnung umfasst, ist vorgesehen, dass die Sprühkopfanordnung ihrerseits mehrere Sprühdüsen mit einem jeweiligen Düsenauslass zum Versprühen der Flüssigkeit und eine diese Sprühdüsen haltenden Halterung aufweist, wobei zumindest zwei der Sprühdüsen ein Sprühdüsenpaar bilden, bei dem die beiden Sprühdüsen bezüglich eines zwischen ihnen vorhandenen und nach außen offenen Freiraums gegenüberliegend angeordnet sind, wobei die Düsenauslässe der Spritzdüsen einander zugewandt sind.

Auf diese Weise kann das Aus- und Nachrüsten eines textilen Flächengebildes, insbesondere eines streifenförmigen textilen Flächengebildes, mit Wirkstoffen wie Insektiziden einfach und effektiv durchgeführt werden. Das textilen Flächengebilde oder zumindest (Rand-) Bereiche des textilen Flächengebildes werden in den nach außen offenen Freiraum verbracht und beidseitig besprüht. Der nach außen offene Freiraum ergibt sich dabei beispielsweise in einer Art Nut, die in der Sprühkopfanordnung ausgebildet ist. Bei einem streifenförmigen textilen Flächengebilde wird die Sprühkopfanordnung so entlang des Streifens Verfahren, dass das streifenförmige textile Flächengebilde sukzessive der Länge nach in den Freiraum aufgenommen und dort beidseitig besprüht wird. Mittels einer tragbaren Sprühvorrichtung kann dies vor Ort geschehen. Im eingangs beschriebenen Fall also direkt an der Hütte beziehungsweise dem Haus.

Gemäß einer bevorzugten Ausführungsform der Erfindung ist vorgesehen, dass die Halterung zumindest einen gabelartigen Halterungsteil mit zwei Fortsätzen aufweist, an denen jeweils eine Sprühdüse des Sprühdüsenpaars angeordnet ist und zwischen denen sich der nach außen offenen Freiraums befindet. Der gabelartige Halterungsteil der Halterung ist bezüglich einer gedachten Hauptebene bevorzugt spiegelsymmetrisch.

Mit Vorteil ist weiterhin vorgesehen, dass der gabelartige Halterungsteil die Form eines Rennradlenkers, insbesondere eines Bahnradlenkers, hat. Von einer Basis der Gabelform ausgehend gibt es an den Enden der Basis je eine erste Biegung hin zu einem jeweiligen Anschlussbereich der Fortsätze. Die Basis und die Anschlussbereiche bilden dabei eine Ebene. Bei jedem der Fortsätze gibt es dann eine zweite Biegung quer, insbesondere Senkrecht, zu dieser Ebene zwischen dem Anschlussbereich und einem Endbereich des jeweiligen Fortsatzes.

Bei einer weiteren bevorzugten Ausführungsform der Erfindung ist vorgesehen, dass die Sprühdüsen des Sprühdüsenpaars derart auf der Halterung angeordnet sind, dass die beiden Hauptsprührichtungen dieser Sprühdüsen einen Winkel α bilden, für den 90° ≤ α ≤ 180° gilt. Die Hauptsprührichtung ist die zentrale Richtung eines Sprühkegels einer Sprühdüse. Da die Düsenauslässe der Sprühdüsen des Sprühdüsenpaars einander zugewandt sind, sind auch die Hauptsprührichtungen dieser Sprühdüsen einander zugewandt, was bei antiparalleler Ausrichtung einem Winkel α von 180° entspricht.

In der Regel sind Düsenauslässe von Sprühdüsen bezüglich einer Längsachse der jeweiligen Sprühdüse symmetrisch an einem Ende angeordnet. Im vorliegenden Fall ist jedoch bevorzugt vorgesehen, dass die Düsenauslässe bezüglich einer Längsachse der Sprühdüsen asymmetrisch angeordnet sind.

Gemäß noch einer weiteren bevorzugten Ausführungsform der Erfindung bildet die Halterung der Sprühkopfanordnung ein Leitungssystem für die Flüssigkeit, an das die Sprühdüsen leitungstechnisch angeschlossen sind. So es keine weiteren Elemente gibt, ist das Leitungssystem also die Halterung. Mit anderen Worten ist die Halterung dann aus den Leitungselementen des Leitungssystems aufgebaut.

Insbesondere ist vorgesehen, dass die tragbare Sprühvorrichtung eine Sprühlanze aufweist, die neben der Sprühkopfanordnung weiterhin einen langgestreckten Lanzenteil aufweist, an dessen Kopfende die Sprühkopfanordnung angeordnet ist. Die Verwendung einer Sprühlanze hat für die eingangs erwähnte Anwendung (Ausrüsten des Textilstreifens am "Eave Gap" mit neuem Wirkstoffprodukt) erhebliche Vorteile. Dabei ist bevorzugt vorgesehen, dass der Lanzenteil eine das Leitungssystem ergänzende Leitung für die Flüssigkeit bildet.

Schließlich ist mit Vorteil vorgesehen, dass der Vorratstank leitungstechnisch über eine flexible Leitung an den Lanzenteil der Sprühlanze oder direkt an die Sprühkopfanordnung angeschlossen wird. Auf diese Weise ist der Lanzenteil der Sprühlanze beziehungsweise die Sprühkopfanordnung besonders gut handhabbar und flexibel nutzbar. Die flexible Leitung ist insbesondere ein Schlauch.

Bei der erfindungsgemäßen Sprühkopfanordnung für eine vorstehend genannte Sprühvorrichtung, welche mehrere Sprühdüsen mit einem jeweiligen Düsenauslass zum Versprühen einer Flüssigkeit und eine diese Sprühdüsen haltende Halterung aufweist, und bei der zumindest zwei der Sprühdüsen ein Sprühdüsenpaar bilden, ist vorgesehen, dass die Sprühdüsen des Sprühdüsenpaars bezüglich eines zwischen ihnen vorhandenen und nach außen offenen Freiraums gegenüberliegend angeordnet und einander mit ihren jeweiligen Düsenauslässen zugewandt sind.

Bevorzugte Ausführungsformen der erfindungsgemäßen Sprühkopfanordnung ergeben sich analog zu solchen vorstehend genannten Ausführungsformen der erfindungsgemäßen Sprühvorrichtung, bei denen sich die Maßnahmen auf die Sprühkopfanordnung beziehen.

Nachfolgend wird die Erfindung unter Bezugnahme auf die anliegenden Figuren anhand von einem bevorzugten Ausführungsbeispiel exemplarisch erläutert, wobei die nachfolgend dargestellten Merkmale sowohl jeweils für sich genommen als auch in Kombination miteinander einen Aspekt der Erfindung darstellen können. Es zeigen:
Figur 1:eine Sprühkopfanordnung für eine tragbare Sprühvorrichtung gemäß einer bevorzugten Ausführungsform der Erfindung,
Figur 2:die Sprühkopfanordnung der Fig. 1 in Aktion,
Figur 3:eine als Rückenspritze ausgebildete tragbare Sprühvorrichtung gemäß einer bevorzugten Ausführungsform der Erfindung, und
Figur 4:die Sprühkopfanordnung der tragbaren Sprühvorrichtung beim beidseitigen besprühen eines Textilstreifens.

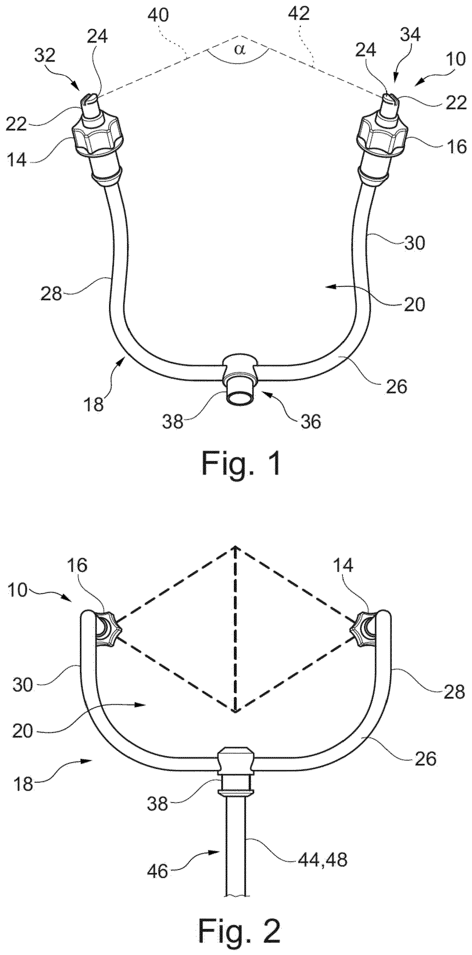

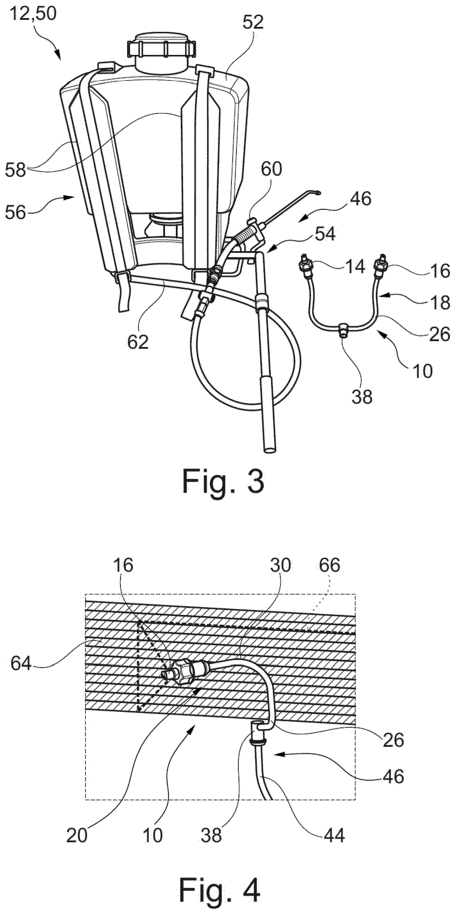

Die Fig. 1 zeigt eine Sprühkopfanordnung 10 für eine in Fig. 3 komplett gezeigte tragbare Sprühvorrichtung 12. Die Sprühkopfanordnung 10 weist mehrere (im Beispiel zwei) Sprühdüsen 14, 16 zum Versprühen von Flüssigkeit und eine diese Sprühdüsen 14, 16 haltenden Halterung 18 auf. Die zwei Sprühdüsen 14, 16 bilden dabei ein Sprühdüsenpaar 14, 16, bei dem die Sprühdüsen 14, 16 bezüglich eines zwischen ihnen vorhandenen und nach außen offenen Freiraums 20 gegenüberliegend angeordnet sind. Jede der Sprühdüsen 14, 16 weist ein Kopfende 22 mit einem Düsenauslass 24 zum Sprühen auf. Dabei sind die jeweiligen Düsenauslässe 24 dieser Sprühdüsen 14, 16 des Paars einander zugewandt. Die Halterung 18 der Sprühkopfanordnung 10 besteht im Wesentlichen aus einem gabelartigen Halterungsteil 26 mit zwei Fortsätzen 28, 30, an deren freien Enden 32, 34 je eine Sprühdüse 14, 16 des Sprühdüsenpaars angeordnet ist und zwischen denen sich der nach außen offenen Freiraum 20 befindet. Die Halterung 18 bildet dabei ein Leitungssystem 36 für die Flüssigkeit, an das die Sprühdüsen 14, 16 leitungstechnisch angeschlossen sind. Der gabelartige Halterungsteil 26 hat dabei grob die Form eines als Rennradlenker ausgebildeten Fahrradlenkers. Mit anderen Worten: Von einer Basis der Gabelform des Halterungsteils 26 ausgehend gibt es an den Enden der Basis je eine erste Biegung hin zu einem jeweiligen Anschlussbereich der Fortsätze 28, 30. Die Basis und die Anschlussbereiche bilden dabei eine Ebene. Bei jedem der Fortsätze 28, 30 gibt es dann eine zweite Biegung quer, genauer gesagt Senkrecht, zu dieser Ebene zwischen dem Anschlussbereich und einem Endbereich des jeweiligen Fortsatzes 28, 30.

Neben dem Halterungsteil 26 weist die Halterung 18 auch einen zentralen Leitungsanschluss 38 auf, über den die Flüssigkeit in das Leitungssystem 36 und die Sprühdüsen 14, 16 gelangt. Die Längsachsen der beiden Sprühdüsen 14, 16 des Sprühdüsenpaars sind bei der hier gezeigten Sprühkopfanordnung 10 parallel ausgerichtet. Damit nun die die jeweiligen Düsenauslässe 24 dieser Sprühdüsen 14, 16 des Paars einander zugewandt sind, sind die Düsenauslässe 24 bezüglich der Längsachse der zugehörigen Sprühdüse 14, 16 asymmetrisch in Richtung des dazwischenliegenden Freiraums 20 angeordnet.

Die beiden Sprühdüsen 14, 16 des Sprühdüsenpaars sind so auf der Halterung 18 beziehungsweise deren Halterungsteil 26 angeordnet, dass die beiden Hauptsprührichtungen 40, 42 der Sprühdüsen 14, 16 einen Winkel α bilden, für den 90° ≤ α ≤ 180 gilt. Im Beispiel der in Fig. 1 gezeigten Sprühkopfanordnung 10 gilt etwa 150°≤ α ≤ 160°.

Die Fig. 2 zeigt die Sprühkopfanordnung 10 der Fig. 1 in Aktion, also beim Versprühen von Flüssigkeit (gestrichelt eingezeichnet). Die beiden Sprühdüsen 14, 16 des Sprühdüsenpaars sind bezüglich des zwischen ihnen vorhandenen und nach außen offenen Freiraums 20 gegenüberliegend angeordnet und weisen je einen um die jeweilige Hauptsprührichtung 40, 42 herum aufgefächerten Sprühkegel auf, der - ausgehend von dem Düsenauslass 24 der jeweiligen Sprühdüse 14, 16 - von der jeweiligen Seite aus leicht schräg in den Freiraum 20 hineinführt.

Die Sprühkopfanordnung 10 ist über den zentralen Leitungsanschluss 38 an ein Kopfende eines Lanzenteils 44 einer Sprühlanze 46 angeschlossen und somit ist die Sprühkopfanordnung 10 Teil dieser Sprühlanze 46. Der Lanzenteil 44 bildet eine das Leitungssystem 36 ergänzende Leitung 48, über die die Sprühkopfanordnung 10 mit Flüssigkeit zum Versprühen versorgt wird. Die Sprühlanze 46 ist ihrerseits Teil der in Fig. 3 gezeigten tragbaren Sprühvorrichtung 12.

Die Fig. 3 zeigt nun diese tragbare Sprühvorrichtung 12, die im Beispiel als Rückenspritze 50 ausgebildet ist. Die Sprühvorrichtung 12 weist einen Vorratstank 52 für die Flüssigkeit, eine Pumpe 54 mit einem gut sichtbaren Pumpenhebel zum Aufbau eines Überdrucks im Vorratstank 52, ein Tragegeschirr 56 mit Gurten 58 und die Sprühlanze 46 auf. Die Sprühlanze 46 umfasst ihrerseits ein am Lanzenteil 44 montiertes Handventil 60, über das die Flüssigkeitszufuhr durch das Lanzenteil 44 zur Sprühkopfanordnung 10 gesteuert werden kann. In der Darstellung der Fig. 3 ist die Sprühkopfanordnung 10 jedoch nicht an das Lanzenteil 44 angeschlossen. Die tragbare Sprühvorrichtung 12 weist weiterhin eine zwischen Vorratstank 52 und Sprühlanze 46 leitungstechnisch zwischengeschaltete flexible Leitung 62 in Form eines Schlauches auf.

Die Fig. 4 zeigt schließlich die Sprühlanze 46 mit der Sprühkopfanordnung 10 beim beidseitigen besprühen eines als Gewebestreifen ausgebildeten textilen Flächengebildes 64, wie er in dem eingangs erwähnten Fachartikel »Mmbando et al.: "Eave ribbons treated with the spatial repellent, transfluthrin, can effectively protect against indoor-biting and outdoor-biting malaria mosquitoes" Malar J (2018) 17:368 https://doi.org/10.1186/s12936-018-2520-1« im Zusammenhang mit Häusern/Hütten in Teilen Afrikas beschrieben wird. Wie diesem Artikel zu entnehmen ist, sind solche Textilstreifen 64 bei einem Haus außen locker zwischen Dach und Hauswand befestigt, sodass die Lüftung und Kühlung noch gewährleistet ist. Damit stets eine Mückenschutzwirkung von den streifenförmigen textilen Flächengebilden 64 ausgeht, müssen diese textilen Flächengebilde von Zeit zu Zeit mit neuem Wirkstoffprodukt ausgerüstet werden. Dieses Wirkstoffprodukt kann dabei mittels der tragbaren Sprühvorrichtung 12 zum Auftragen des entsprechenden Wirkstoffs, der in diesem Zusammenhang insbesondere ein Insektizid ist, besonders bequem und effektiv auf derartige streifenförmige textile Flächengebilde 64 oder andere textile Flächengebilde 64 beidseitig aufgebracht werden. Neben dem aufgefächerten Sprühstrahl ist auch ein bereits besprühter Bereich 66 des textilen Flächengebildes 64 gestrichelt eingezeichnet.

Im Folgenden sollen nun wichtige Aspekte der Erfindung noch einmal mit anderen Worten wiedergegeben werden:
Die Problemstellung befasst sich mit der Behandlung bzw. Re-Imprägnierung von Gewebestreifen oder anderen textilen Flächengebilden 64, die an Häusern/Hütten afrikanischer Bauart befestigt sind. Problem hierbei ist die Erreichbarkeit der Streifen im Giebelbereich, die nur einseitige Besprühung bei normalen Rückenspritzen und evtl. die Tröpfchendrift, der der Operator ausgesetzt während des Sprühens ausgesetzt ist. Normale Rückenspritzen sprühen nach vorne heraus und erfordern damit die Sprühlanze 46 gerade zu halten. Damit lässt sich ein Sisalstreifen, besonders im Giebelbereich nicht behandeln. Darüber hinaus kann nicht vom Innenraum der Hütte gegen den Gewebestreifen gesprüht werden.

Eine als gebogene Sprühlanzenspitze mit nach Innen gerichtetem Sprühstrahl ausgebildete Sprühkopfanordnung 10, wie hier beschrieben, erlaubt es den Gewebestreifen, beziehungsweise allgemein das textile Flächengebilde 64, von beiden Seiten gleichzeitig, und zwar von Außerhalb der Hütte, zu behandeln. Darüber hinaus kann die so ausgestaltete Sprühkopfanordnung 10 der Sprühlanze 46 von unten an den Gewebestreifen / das textile Flächengebilde 64 herangeführt werden, was die Länge der Sprühlanze 46 voll ausnutzt. Dadurch können die Anwender auch die Teile des Gewebestreifens / des textilen Flächengebildes 64 im höheren Giebelbereich erreichen.

### Bezugszeichen

- 10: Sprühkopfanordnung
- 12: Sprühvorrichtung, tragbar
- 14: Sprühdüse
- 16: Sprühdüse
- 18: Halterung
- 20: Freiraum
- 22: Kopfende
- 24: Düsenauslass
- 26: Halterungsteil, gabelartig
- 28: Fortsatz
- 30: Fortsatz
- 32: freies Ende
- 34: freies Ende
- 36: Leitungssystem
- 38: Leitungsanschluss
- 40: Hauptsprührichtung
- 42: Hauptsprührichtung
- 44: Lanzenteil
- 46: Sprühlanze
- 48: Leitung
- 50: Rückenspritze
- 52: Vorratstank
- 54: Pumpe
- 56: Tragegeschirr
- 58: Gurt
- 60: Handventil
- 62: flexible Leitung
- 64: textiles Flächengebilde
- 66: Bereich
- α: Winkel zwischen Hauptsprührichtungen

## Patentansprüche

1. Tragbare Sprühvorrichtung (12) zum Auftragen von einem Wirkstoff, insbesondere einem Insektizid, auf ein textiles Flächengebilde (64), mit einem Vorratstank (52) für eine den Wirkstoff beinhaltende Flüssigkeit und mit einer Sprühkopfanordnung (10), die mehrere Sprühdüsen (14, 16) mit einem jeweiligen Düsenauslass (24) zum Versprühen der Flüssigkeit und eine diese Sprühdüsen (14, 16) haltenden Halterung (18) aufweist, wobei zumindest zwei der Sprühdüsen (14, 16) ein Sprühdüsenpaar bilden, bei dem die beiden Sprühdüsen (14, 16) bezüglich eines zwischen ihnen vorhandenen und nach außen offenen Freiraums (20) gegenüberliegend angeordnet und die Düsenauslässe (24) der Spritzdüsen (14, 16) einander zugewandt sind.

2. Sprühvorrichtung nach Anspruch 1, **dadurch gekennzeichnet, dass** die Halterung (18) zumindest einen gabelartigen Halterungsteil (26) mit zwei Fortsätzen (28, 30) aufweist, an denen jeweils eine Sprühdüse (14, 16) des Sprühdüsenpaars angeordnet ist und zwischen denen sich der nach außen offenen Freiraum (20) befindet.

3. Sprühvorrichtung nach Anspruch 2, **dadurch gekennzeichnet, dass** der gabelartige Halterungsteil (26) die Form eines Rennradlenkers, insbesondere eines Bahnradlenkers, hat.

4. Sprühvorrichtung nach einem der vorhergehenden Ansprüche, **dadurch gekennzeichnet, dass** die beiden Sprühdüsen (14, 16) des Sprühdüsenpaars derart auf der Halterung (18) angeordnet sind, dass die beiden Hauptsprührichtungen (40, 42) der Sprühdüsen (14, 16) einen Winkel α bilden, für den 90° ≤ α ≤ 180 gilt.

5. Sprühvorrichtung nach einem der vorhergehenden Ansprüche, **dadurch gekennzeichnet, dass** der jeweilige Düsenauslass (24) jeder der beiden Sprühdüsen (14, 16) des Sprühdüsenpaars bezüglich einer Längsachse der jeweiligen Sprühdüse (14; 16) asymmetrisch angeordnet ist.

6. Sprühvorrichtung nach einem der vorhergehenden Ansprüche, **dadurch gekennzeichnet, dass** die Halterung (18) der Sprühkopfanordnung (10) ein Leitungssystem (36) für die Flüssigkeit bildet, an das die Sprühdüsen (14, 16) leitungstechnisch angeschlossen sind.

7. Sprühvorrichtung nach einem der vorhergehenden Ansprüche, **gekennzeichnet durch** eine Sprühlanze (46), die neben der Sprühkopfanordnung (10) weiterhin einen langgestreckten Lanzenteil (44) aufweist, an dessen Kopfende die Sprühkopfanordnung (10) angeordnet ist.

8. Sprühvorrichtung nach einem der vorhergehenden Ansprüche, **dadurch gekennzeichnet, dass** der Lanzenteil (44) eine das Leitungssystem (36) ergänzende Leitung (48) für die Flüssigkeit bildet.

9. Sprühvorrichtung nach einem der vorhergehenden Ansprüche, **dadurch gekennzeichnet, dass** der Vorratstank (52) leitungstechnisch über eine flexible Leitung (62) an den Lanzenteil (44) der Sprühlanze (46) oder direkt an die Sprühkopfanordnung (10) angeschlossen ist.

10. Sprühkopfanordnung (10) für eine tragbare Sprühvorrichtung (12) nach einem der vorhergehenden Ansprüche, wobei diese Sprühkopfanordnung (10) mehrere Sprühdüsen (14, 16) mit einem jeweiligen Düsenauslass (24) zum Versprühen einer Flüssigkeit und eine diese Sprühdüsen (24) haltende Halterung (18) aufweist, wobei zumindest zwei der Sprühdüsen (14, 16) ein Sprühdüsenpaar bilden, bei dem die Sprühdüsen (14, 16) bezüglich eines zwischen ihnen vorhandenen und nach außen offenen Freiraums (20) gegenüberliegend angeordnet sind und die Düsenauslässe (24) der Spritzdüsen (14, 16) einander zugewandt sind.
